(19)

Europäisches
Patentamt
European
Patent Office
Office européen
des brevets

(11) **EP 3 016 436 A1**

(12) **EUROPEAN PATENT APPLICATION**

(43) Date of publication:
04.05.2016 Bulletin 2016/18

(51) Int Cl.:
*H04W 36/08* <sup>(2009.01)</sup>

(21) Application number: 14306738.7

(22) Date of filing: 30.10.2014

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventor: **Valentin, Stefan
70435 Stuttgart (DE)**

(74) Representative: **2SPL Patentanwälte PartG mbB
Postfach 15 17 23
80050 München (DE)**

Remarks:
Amended claims in accordance with Rule 137(2)
EPC.

(54) **Apparatuses, Base Station Transceiver, Methods and Computer Programs for Providing Information related to an Assignment of one or more Mobile Transceivers to at least one out of two or more Base Station Transceivers of a Mobile Communication System**

(57)     Embodiments provide apparatuses, a base station transceiver, methods and computer programs for providing information related to an assignment of one or more mobile transceivers (100) to at least one out of two or more base station transceivers (200) of a mobile communication system (300). An apparatus (10) comprises an input (12) to obtain information related to one or more preference profiles about the one or more mobile transceivers (100), an output (14) to provide the information related to the assignment of the one or more mobile transceivers (100) to the two or more base station transceivers (200), and a control module (16) to determine the information related to the assignment of the one or more mobile transceivers (100) to the at least one of the two or more base station transceivers (200) based on the information related to the one or more preference profiles from the one or more mobile transceivers (100).

Fig. 1

**Description**

Technical Field

Embodiments relate to apparatuses, a base station transceiver, methods and computer programs for providing information related to an assignment of one or more mobile transceivers to at least one out of two or more base station transceivers of a mobile communication system, particularly, but not exclusively, based on information related to one or more preference profiles.

Background

This section introduces aspects that may be helpful in facilitating a better understanding of the invention(s). Accordingly, the statements of this section are to be read in this light and are not to be understood as admissions about what is in the prior art or what is not in the prior art.

Demands for higher data rates for mobile services are steadily increasing. At the same time modem mobile communication systems such as 3rd Generation systems (3G) and 4th Generation systems (4G) provide enhanced technologies, which enable higher spectral efficiencies and allow for higher data rates and cell capacities. The demands are growing for both directions of transmission, in the DownLink (DL) for transmission from the network infrastructure to a mobile transceiver, as well as in the UpLink (UL) for transmission from a mobile transceiver to the network infrastructure.

Current mobile communication systems increasingly rely on a Heterogeneous Network (HetNet) of larger macro cell base stations and small cell base stations. Small cell base stations can be used to cover areas where the macro cell base stations do not provide coverage, to augment the capacity available in the mobile communication system by offloading some requests, which could be handled by the macro cell base station, to small cell base stations in the same coverage area, and to improve network efficiency. HetNets and small cells may appear to be an efficient approach to increase the capacity and improve network efficiency. However, deployments of small cells may face a number of challenges, such as, for example, environment constraints, challenges concerning the handover mechanisms in heterogeneous networks, small caches comprised in small cells and a possibly limited backhaul connectivity of small cells.

Further information can be found in:

S. Woo, E. Jeong, and S. Park, "Comparison of caching strategies in modem cellular backhaul networks," in Proceedings of the 11th annual international conference on Mobile systems, applications, and services (MobiSys), Taipei, Taiwan, June 2013;

N. Golrezaei, K. Shanmugam, A. G. Dimakis, and A. F. Molisch, "Femtocaching: Wireless video content delivery through distributed caching helpers," in Proceedings of INFOCOM, Orlando, FL, March 2012;

H. Ahlehagh and S. Dey, "Video-aware scheduling and caching in the radio access network," IEEE/ACM Transactions on Networking, DOI:10.1109/TNET.2013.2294111, pp. 1063-6692, August 2013; and

P. Blasco and D. Gunduz, "Learning-based optimization of cache content in a small cell base station," in Proc. of IEEE International Conference on Communications (ICC 2014), Sydney, Australia, June 2014.

Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide apparatuses, a base station transceiver, methods and computer programs for providing information related to an assignment of one or more mobile transceivers to at least one out of two or more base station transceivers of a mobile communication system. Operators of mobile communication systems seek to increase the performance available to mobile transceivers at a base station transceiver. Using a caching system to keep frequently requested data in a buffer, base station transceivers, which may have a limited backhaul connection, may be able to increase the performance for the mobile transceiver, without putting additional strain on the backhaul connection. Especially in small cell base station transceivers, the buffer may be limited, so further a more efficient assignment of mobile transceivers to base station transceivers with the appropriate content in a buffer may further increase the performance for mobile transceivers.

Embodiments provide an apparatus for providing information related to an assignment of one or more mobile transceivers to at least one out of two or more base station transceivers of a mobile communication system. The apparatus comprises an input to obtain information related to one or more preference profiles about the one or more mobile transceivers and an output to provide the information related to the assignment of the one or more mobile transceivers to the two or more base station transceivers. The apparatus further comprises a control module to determine the information related to the assignment of the one or more mobile transceivers to the at least one of the two or more base station transceivers based on the information related to the one or more preference profiles from the one or more mobile transceivers. Based on an assignment based on the one or more preference profiles, the one or more mobile transceivers might be assigned to the one of the two or more base stations transceivers which best matches the preference profile.

In some embodiments, the input may further be configured to obtain information related to one or more content profiles about the two or more base station transceivers. The control module may be configured to determine the information related to the assignment of the one or more mobile transceivers to the at least one of the two or more base station transceivers also based on the information related to the one or more content profiles about the two or more base station transceivers. In embodiments, the matching of content and preference profiles may result in a more efficient assignment of the one or more mobile transceiver to the two or more base station transceivers.

In various embodiments, the one or more preference profiles may be based on information related to at least one element of the group of social attributes, location attributes, interest attributes, or content history attributes of one or more users of the one or more mobile transceivers. The information related to the one or more content profiles may, in embodiments, be based on information related to at least one element of the group of social attributes, location attributes, interest attributes, or content history attributes of one or more users of the two or more base station transceivers, or predefined location or interest specific content of the two or more base station transceivers. Although embodiments may support a wide range of preference and content profiles, such profiles might in embodiments also be used to select a limited set of specific content profiles matching a location or an environment.

In some embodiments, the input may further be configured to obtain the information related to the one or more content profiles from the two or more base station transceivers. The control module may further be configured to determine the information related to the assignment of the one or more mobile transceivers to the at least one of the two or more base station transceivers also based on the information related to the one or more preference profiles available at one or more of the two or more base station transceivers. Obtaining the information related to the one or more content profiles from the two or more base station transceivers may, in embodiments, enable the apparatus to determine an assignment locally at a base station transceiver, without the need for additional central instances.

In various embodiments, the information related to the one or more content profiles about the two or more base station transceivers may be based on information related to the content provided by caching modules comprised in the two or more base station transceivers. Using information provided by the caching modules, embodiments might for example provide the content profiles on the fly based on a caching history, or based on a pre-determined caching strategy.

In some embodiments, the control module may be configured to determine information related to a correlation between the information related to the preference profile of the one or more mobile transceivers and the information related to the one or more content profiles about the two or more base station transceivers and to determine the information related to the assignment based on the information related to the correlation. Using such correlations to match content profiles and preference profiles, embodiments may determine the assignment of the one or more mobile transceiver and the two or more base station transceivers.

The control module may further, in embodiments, be configured to determine a ranking of a plurality of mobile transceivers based on the information related to the correlation. In embodiments, the control module may further be configured to determine the information related to the assignment based on the ranking of the plurality of the mobile transceivers. Using this ranking, a base station transceiver might, in embodiments, determine which mobile transceivers to admit to the base station transceiver.

In various embodiments, the control module may be configured to obtain the information related to one or more preference profiles about the one or more mobile transceivers from a social network server or from the one or more mobile transceivers. In embodiments, the information collected by a social network used by to the user of the mobile transceiver may provide the preference profiles to use for the assignment.

In some embodiments, the control module may further be configured to obtain information related to an achievable data rate between the one or more mobile transceivers and the two or more base station transceivers. The control module may further configured to further base the determination of the information related to the assignment on the information related to the achievable data rate. Using the information related to an achievable data rate between the one or more mobile transceiver and the two or more base station transceiver, embodiments may further increase the performance for the one or more mobile transceivers, and/or may provide a criteria for the assignment of mobile transceivers, for which no preference profile may be obtainable.

Embodiments further provide an apparatus for providing information related to a content profile of a base station transceiver. The apparatus comprises one or more caching modules to at least temporarily store data content requested by a mobile transceiver assigned to the base station transceiver. The apparatus further comprises a control module to determine information about the stored data content, compose the information related to the content profile of the base station transceiver based on the information about the stored content, and provide the information related to the content profile of the base station transceiver. Embodiments may use the information related to the content profile of the base station transceiver for an assignment of one or more mobile transceiver to one of two or more base station transceivers.

In various embodiments, the information related to the one or more content profiles may be based on information related to at least one element of the group of social attributes, location attributes, interest attributes, or content history attributes of one or more users of the two or more base station transceivers, or predefined location or interest specific content of the two or more base station transceivers. Although embodiments may support a wide range of content profiles, such profiles might in embodiments also be used to select a limited set of specific content profiles matching a location or an environment.

Embodiments further provide a base station transceiver comprising the apparatus for providing information related to an assignment of one or more mobile transceivers to at least one out of two or more base station transceivers of a mobile communication system and/or the apparatus for providing information related to a content profile of a base station transceiver. In embodiments, the apparatuses may use data from the base station transceiver to determine the information related to an assignment of the one or more mobile transceivers.

Embodiment further provide a method for providing information related to an assignment of one or more mobile transceivers to at least one out of two or more base station transceivers of a mobile communication system. The method comprises obtaining information related to one or more preference profiles about the one or more mobile transceivers and providing the information related to the assignment of the one or more mobile transceivers to the two or more base station transceivers. The method further comprises determining the information related to the assignment of the one or more mobile transceivers to the at least one of the two or more base station transceivers based on the information related to the one or more preference profiles from the one or more mobile transceivers.

Embodiments further provide a method for providing information related to a content profile of a base station transceiver. The method comprises at least temporarily storing data content requested by a mobile transceiver assigned to the base station transceiver. The method further provides determining information about the stored data content, composing the information related to the content profile of the base station transceiver based on the information about the stored content and providing the information related to the content profile of the base station transceiver.

Embodiments further provide a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

Brief description of the figures

Some other features or aspects will be described using the following non-limiting embodiments of apparatuses or methods or computer programs or computer program products by way of example only, and with reference to the accompanying figures, in which:

Fig. 1 illustrates a block diagram of an embodiment of an apparatus for providing information related to an assignment of one or more mobile transceivers to at least one out of two or more base station transceivers of a mobile communication system;

Fig. 2 illustrates a map of an embodiment in a small cell networks scenario where more than one feasible base station transceiver may exist for the mobile transceivers;

Fig. 3 illustrates a block diagram of an embodiment using a centralized approach;

Fig. 4 illustrates a flow chart of an embodiment using a distributed approach;

Fig. 5 illustrates a block diagram of an embodiment of an apparatus for providing information related to a content profile of a base station transceiver;

Fig. 6 illustrates a block diagram of an embodiment of a base station transceiver comprising the apparatus for providing information related to an assignment of one or more mobile transceivers to at least one out of two or more base station transceivers of a mobile communication system and/or the apparatus for providing information related to a content profile of a base station transceiver;

Fig. 7 illustrates a flow chart of an embodiment of a method for providing information related to an assignment of one or more mobile transceivers to at least one out of two or more base station transceivers of a mobile communication system; and

Fig. 8 illustrates a flow chart of an embodiment of a method for providing information related to a content profile of a base station transceiver.

Description of Embodiments

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

The introduction of Smartphones and tablets has led to the proliferation of bandwidth-intensive wireless services, such as multimedia streaming and social networking, which have strained the capacity of present-day wireless communication networks. Small cell networks and heterogeneous networks may often be considered a promising approach to meet the Quality of Service (QoS) requirements of such emerging wireless services. However, small cell networks and heterogeneous networks may add new challenges to backhaul scheduling, cell association, and resource management.

Due to constraints of the environment and the dense deployment of Small Cell Base Stations (SCBSs), high-capacity wired backhauls might not be available for every cell. The resulting backhaul constraint may cause significant delays in service and decrease the user's Quality of Experience (QoE). To cope with this limit, cache content placement may decrease the backhaul traffic. For small cell network scenarios, the following observations may be made: First, the cache sizes for small cell base stations may be relatively smaller than cache sizes in macro cellular networks. Hence, opportunistic cache content placement may be inefficient for small cell networks. Second, unplanned deployments of small cell base stations may impose fast handovers and rapid changes in the user set within each cell. Relying on the short term effects, such as caching based on the preferences of active users might not be efficient.

Some systems may incorporate caching schemes in either core network or at regional digital unit aggregation points. These caching approaches might not decrease the cellular backhaul traffic, since small cell base stations may still need to fetch the data from the core network. Therefore, embodiments may perform caching directly at the Radio Access Network (RAN). Approaches for caching in the RAN might be generally divided into two groups: 1) proactive caching and 2) reactive caching.

Proactive caching refers to storing the contents prior to the users' requests. Some systems may use femto cells with large storage capacities to assist the macro base stations for video content delivery. This approach, however, may require additional nodes and may need users to have access to them. In addition, such proactive caching may be based on a global popularity of content and may disregard the correlations among the local users' interests. Even popular content might not necessarily be interesting for the users at a particular location or cell. Therefore, this approach might not be efficient, especially for small cell networks with relatively small cache sizes at SCBSs are relatively small.

Reactive caching refers to storing the contents that users have requested. In some systems, the active users' preference profiles (UPPs) for both proactive caching and reactive caching may be used. The UPPs may be defined as a probability that the user may request a video from a particular category, however, it may be unknown how such information may be be extracted. Moreover, the decision process for adding or evicting a content may depend only on the current users' preferences. Such scheme may be inefficient, since the user set may change, due to the mobility of the users. Hence, this scheme might impose redundant changes in cache directories by disregarding the long term effects. In some systems, a cache content placement approach may be used, based on the history of content requests. Nonetheless, embodiments may consider that cached contents of a cell may be requested by the users who were assigned to that cell in the past. Therefore, the user-cell assignment may be conducted so as to avoid opportunistic cache content placements and positively adjust backhaul scheduling in the long-term.

In embodiments, it may be assumed that a set of Small Cell Base Stations (SCBSs) supports a user at least at a minimum wireless bitrate and that each SCBS may be equipped with a cache for user content. Under these assumptions, embodiments may associate a user to the specific SCBS whose cached content may show the highest correlation to the user's interest.

Interest here might be defined by context measures such as location, building type, social media information, and history of the requested content. Since this definition of interest may be highly correlated with the requested content, in embodiments, a context-aware association system may increases the probability of a "cache hit" and, thus, it may reduce backhaul traffic.

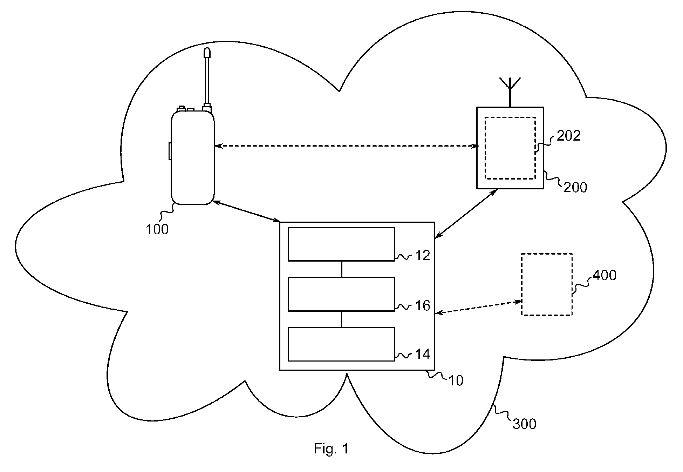

In the following some embodiments of apparatuses, methods and computer programs for providing information related to an assignment of one or more mobile transceivers to at least one out of two or more base station transceivers of a mobile communication system will be introduced. Fig. 1 illustrates a block diagram of an embodiment of an apparatus 10 for providing information related to an assignment of one or more mobile transceivers to at least one out of two or more base station transceivers of a mobile communication system, comprising an input 12, an output 14, and a control module 16. Fig. 1 further illustrates one or more mobile transceivers 100, and two or more base station transceivers 200. For some embodiments, Fig. 1 further illustrates a social network server 400. In some embodiments, the two or more base station transceivers 200 may comprise caching modules 202. The apparatus 10 is coupled to the one or more mobile transceivers 100 and the two or more base station transceivers 200. In some embodiments, the apparatus 10 is further coupled to the social media server 400. The input 12 and the output 14 are coupled to the control module 16. The one or more mobile transceivers 100 are assigned to one of the two or more base station transceivers 200, as indicated by the dashed arrows.

Embodiments provide an apparatus 10 for providing information related to an assignment of one or more mobile transceivers 100 to at least one out of two or more base station transceivers 200 of a mobile communication system 300.

In general, the mobile communication system may, for example, correspond to one of the Third Generation Partnership Project (3GPP)-standardized mobile communication networks, where the term mobile communication system is used synonymously to mobile communication network. The mobile or wireless communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a car, a mobile relay transceiver for D2D communication, etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, radio equipment, a macro cell, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit.

A mobile transceiver can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

The apparatus 10 comprises an input 12 to obtain information related to one or more preference profiles about the one or more mobile transceivers 100 and an output 14 to provide the information related to the assignment of the one or more mobile transceivers 100 to the two or more base station transceivers 200.

An input may correspond to an interface for receiving information, which may be in digital (bit) values according to a specified code, within a module, between modules or between modules of different entities. An output may correspond to an interface for transmitting information, which may be represented by digital (bit) values according to a specified code or protocol, within a module, between modules, or between modules of different entities.

In some embodiments, the one or more preference profiles may be based on information related to at least one element of the group of social attributes, location attributes, interest attributes, or content history attributes of one or more users of the one or more mobile transceivers 100. Social attributes may correspond to information related to the content profile of the user of the mobile transceiver 100 in one or more social networks, or information related to social groups the user of the mobile transceiver 100 may belong to etc. Location profiles may correspond to information related to a location, such as a landmark, a commercial building, a museum, a performance space, a sports arena etc. Interest profiles may correspond to information related to a field of interest, such as, for example, arts, sports, science, but also more limited fields, such as an epoch in art, or information related to a single painter/performer/composer etc. Content history attributes may correspond to information related to content previously requested by the mobile transceiver or the user of the mobile transceiver.

The apparatus 10 further comprises a control module 16 to determine the information related to the assignment of the one or more mobile transceivers 100 to the at least one of the two or more base station transceivers 200 based on the information related to the one or more preference profiles from the one or more mobile transceivers 100. In embodiments the control module 16 may be implemented using one or more processing units, one or more processing devices, any means for processing, such as a processor, a computer or a programmable hardware component being operable with accordingly adapted software. In other words, the described functions of the control module 16 may as well be implemented in software, which is then executed on one or more programmable hardware components. Such hardware components may comprise a general purpose processor, a Digital Signal Processor (DSP), a micro-controller, etc.

In various embodiments, the control module 16 may be configured to obtain the information related to one or more preference profiles about the one or more mobile transceivers 100 from a social network server 400 also shown in Fig. 1, or from the one or more mobile transceivers 100. A social network server 400 may correspond to a network entity providing information related to social attributes of the user of a mobile transceiver.

In some embodiments, the input 12 may be further configured to obtain information related to one or more content profiles about the two or more base station transceivers 200. The control module 16 may further be configured to determine the information related to the assignment of the one or more mobile transceivers 100 to the at least one of the two or more base station transceivers 200 also based on the information related to the one or more content profiles about the two or more base station transceivers 200. The information related to one or more content profiles may correspond to information related to at least one element of the group of social attributes, location attributes, interest attributes, or content history attributes of one or more users of the two or more base station transceivers (200), predefined location or interest specific content of the two or more base station transceivers (200).

Social attributes may correspond to information related to the content profile of the user of the base station transceiver 200 in one or more social networks, or information related to social groups the user of the base station transceiver 200 may belong to etc. Location profiles may correspond to information related to a location, such as a landmark, a commercial building, a museum, a performance space, a sports arena etc. Interest profiles may correspond to information related to a field of interest, such as, for example, arts, sports, science, but also more limited fields, such as an epoch in art, or information related to a single painter/performer/composer etc. Content history attributes may correspond to information related to content previously requested by the mobile transceiver or the user of the mobile transceiver. The predefined location or interest specific content of the two or more base station transceivers 200 may correspond to location attributes or interest attributes which may be manually and semi-permanently assigned to the base station transceiver.

In various embodiments, the input 12 may further be configured to obtain the information related to the one or more content profiles from the two or more base station transceivers. The control module 16 may, in embodiments, be further configured to determine the information related to the assignment of the one or more mobile transceivers 100 to the at least one of the two or more base station transceivers 200 also based on the information related to the one or more preference profiles available at one or more of the two or more base station transceivers 200.

In various embodiments, the information related to the one or more content profiles about the two or more base station transceivers 200 may be based on information related to the content provided by caching modules 202 comprised in the two or more base station transceivers 200, as shown in Fig. 1. A caching module may correspond to a module for the temporary storage of content, such as HTML pages, images and videos, which may reduce the data transmissions on the backhaul connection of the base station transceiver. The temporary storage of content might be implemented using a memory for at least temporarily storing data, such as, for example, Random Access Memory (RAM), non-volatile storage, and flash memory.

In at least some embodiments, the control module 16 may be configured to determine information related to a correlation between the information related to the preference profile of the one or more mobile transceivers 100 and the information related to the one or more content profiles about the two or more base station transceivers 200. In embodiments, the control module 16 may further determine the information related to the assignment based on the information related to the correlation. A correlation may correspond to a statistical relationship between the information related to the preference profile of the one or more mobile transceivers 100 and the information related to the one or more content profiles about the two or more base station transceivers 200

In some embodiments, the control module 16 may be configured to determine a ranking of a plurality of mobile transceivers 100 based on the information related to the correlation. The control module 16 may further be configured to determine the information related to the assignment based on the ranking of the plurality of the mobile transceivers 100.

In various embodiments, the control module 16 may be further configured to obtain information related to an achievable data rate between the one or more mobile transceivers 100 and the two or more base station transceivers 200. The control module 16 may further be configured to further base the determination of the information related to the assignment on the information related to the achievable data rate. The information related to an achievable data rate may, in embodiments, correspond to information related to at least one element of the group of a receive signal power, a Receive Signal Strength Indicator (RSSI), an RSSI region or interval, a Signal-to-Noise-Ratio (SNR), a Signal-to-Interference Ratio (SIR), a Signal-to-Interference-and-Noise Ratio (SINR), a supported constellation size of the signal modulation, a supported rate of the forward error correction, a supported data rate, or a network or transmission mode.

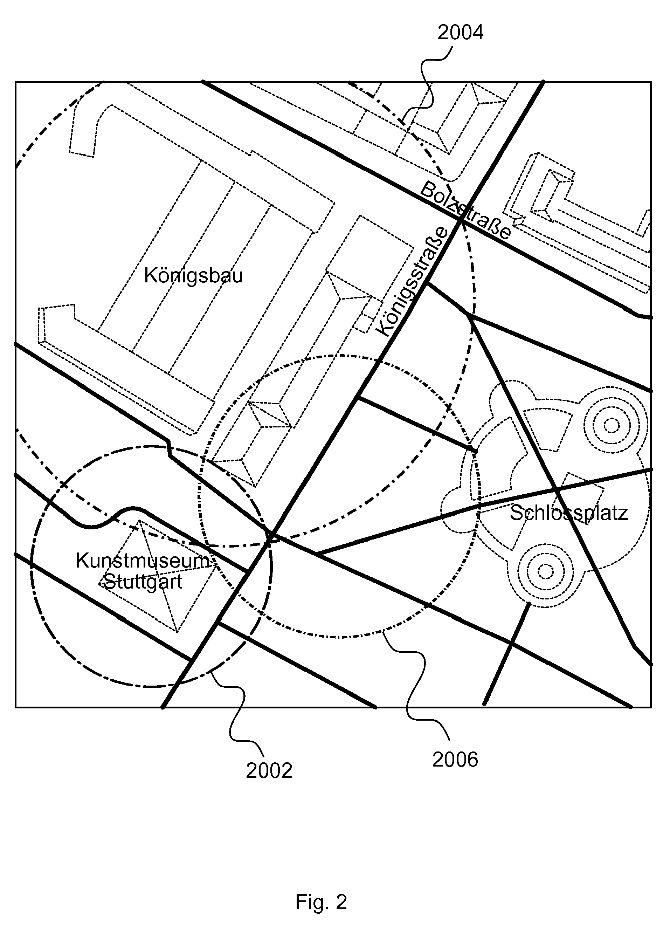

Fig. 2 illustrates an embodiment in a scenario in a city center, where multiple small cells' coverage may overlap. Three small cells 2002, 2004 and 2006 are illustrated, which may cover a museum (2002), shopping mall (2004), and a part of the main square (2006). The content that a user might request may be affected by the location of the user. For example, contents that might be requested by the users in an art museum may relate more to the art than other type of contents. Or people at a stadium may be probable to request sport-related content rather than arts. In particular, the topic of the requested file may be correlated with the aim of the user for being on that location.

In some systems, users may be assigned to cells based on the maximum Received Signal Strength Indictor (RSSI) or maximum Signal to Interference plus Noise Ratio (SINR) metrics. Therefore, the user that's might be going to visit the museum, but is closer to the shopping mall may be assigned to the mall's SCBS. Although the requested file might be relevant to the cached contents at the museum SCBS, it may be stored in the cache of mall's cell which might not be useful for users at the mall. In the long term, all caches may contain a portion of contents from different social themes. Such content caching placement approaches might be considered opportunistic, since the cell association may be based only on the user's proximity to the cells, which may be random. Since contents from different social themes may be contained within the cache, it may be less probable that a new user may find its requested content from the cached data.

Embodiments may assign a (social) content profile to a small cell, as a topic that the majority of cached contents of the cell may belong to. An SCBS might be associated with more than one content profiles. In this regard, a set $T$ is defined as $T = \{t_1, t_2, \ldots, t_j\}$ content profiles for the neighboring cells within a certain area. The set $T$ may depend on the requests of the users in the past and the location of the SCBSs.

Embodiments may provide centralized and distributed approaches to associate a user to a base station with content profiles matching best to its interest profiles. Embodiments may account for the user's social attribute vector $a_m$ to understand the content profiles that the user m might be interested in. The attribute vector may, among others, contain the users' interests for content categories, such as art, sport, etc. In embodiments, such information might be extracted from the user's profiles in online social networks where people might state their interests.

For a new user, embodiments may assign the user to a feasible cell with one or more content profile that may be highly correlated with the user's preference profile. Thus, it may be more probable that the user's request might be served from the cached content. In embodiments, due to context-aware cell assignment, the cache at each small cell might be predominantly filled with theme-correlated contents. In embodiments, the content profiles may evolve with time, without enforcing any proactive cache policies. For instance, the cached data at museums might contain mostly art-related content, while the SCBS at a shopping mall might cache content with commercial themes.

In embodiments, it is assumed that each base station transceiver, which may correspond to the base station transceiver 200, may be equipped with a storage unit and is capable of storing the requested data for a certain time span. Let $L$ and $M$ denote, respectively, the set of $L$ base station transceivers and the set of $M$ users, which may correspond to the users of the mobile transceivers 100. Moreover, it may be assumed that the total bandwidth may be divided into $N$ subbands with the set $N$, and all the base station transceivers share the same bandwidth. The cell association $x^*$ is assumed to be the assignment of each user $m \in M$ to at most one $l \in L$ of the two or more base station transceivers, i.e., $x^*: M \rightarrow L$. Further, a user-cell assignment may be considered feasible, if the average achievable rate for user $l$ from base station transceiver $l$, $\Phi_{m,l}$ is greater than a threshold $\Phi_{m,th}$. The threshold might be determined based on a Quality of Experience (QoE) or a data rate expectation of the user. $\Phi_{m,l}$ might be written as

$$\Phi_{m,l} = \frac{1}{N_m} \sum\nolimits_{n \in N_m} \Phi_{\min}(\gamma_{min}) = \frac{1}{N_m} \sum\nolimits_{n \in N_m} w_n log(1 + \gamma_{min})$$

where $\gamma_{min}$ and $\Phi_{min}$ may denote, respectively, the received SINR and the achievable rate at user $m$ from base station transceiver $l$ over subcarrier $n$. In addition, $N_m \subseteq N$ and $w_n$ may denote, respectively, the set of $N_m$ subcarriers assigned to user m and the bandwidth of the subcarrier $n$.

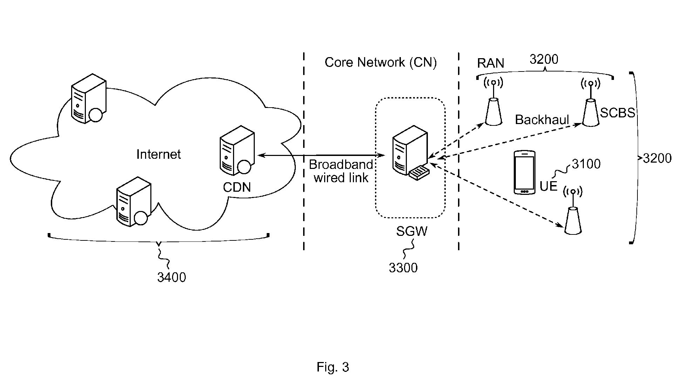

Fig. 3 shows a block diagram of an embodiment of a network model for a centralized socially-aware cell association. Fig. 3 illustrates a User Equipment (UE) 5100, which may correspond to the one or more mobile transceivers 100, a number of SCBSs 3200, which may correspond to the two or more base station transceivers 200, comprised in a Radio Access Network (RAN) of a mobile communication system. Fig. 3 further illustrates a Serving GateWay (SGW) 3300 comprised in the Core Network (CN) of the mobile communication system. Fig. 3 further illustrates a number of content servers 3400 comprised in the internet. The SCBS 3200 are coupled to the SGW 3300, while the SGW 3300 is coupled to the content servers 3400. The list of SCBSs' cached contents may be stored in a local directory server, which be comprised in the serving gateway 3300. The SGW 3300 may be responsible for forwarding the data packets, and might also act as a mobility anchor to manage handovers. For any detected user, the SCBSs 3200 may redirect the user's ID to the server, which may extract the user's social attributes $a_m$. Next, in embodiments, the user-cell assignment might be formulated as:

$$Maximize \ x^* \sum_{m \in M} x_{m,l} \sum_{t_i \in T_l} P(t_i|a_m)$$

$$subject \ to \ \sum_{m \in M} x_{m,l} \leq 1 \ \forall m \in M,$$

$$\sum_{m \in M} x_{m,l} \Phi_{m,l} \geq \Phi_{m,th} \forall m \in M,$$

$$x_{m,l} \in \{0,1\}$$

where $P(t_i|a_m)$ may denote the conditional distribution of content profile t, which may be based on the interest of user $m$. Moreover, $T_l \subseteq T$ may represent the set of content profile within the caching module of SCBS $l$. Once a cell assignment is done and users are served, the server might update the list of cached contents. With such adaptive optimization scheme, a correlation among cached data of each base station transceiver might be increased let the relevant social themes might evolve and dominate the irrelevant content profiles.

Embodiments may further provide a distributed approach. In contrast to the centralized approach, there might be no server to store the list of all cached content profiles and extract the social attributes of the users. In embodiments, SCBSs 3200 might have access only to their own local information of channel states and cached content profiles. In embodiments, they may extract the social attributes for users in their coverage area.

Embodiments may provide that an arbitrary SCBS may have the incentive to serve a user with preference profiles close to its content profiles. As described above, the SCBS might benefit from users that may be more probable to be served directly with the cached data. In addition, users might also benefit from this assignment, due to a reduced service delay. Therefore, users might compete with one another to be assigned to their preferred SCBS and vice versa.

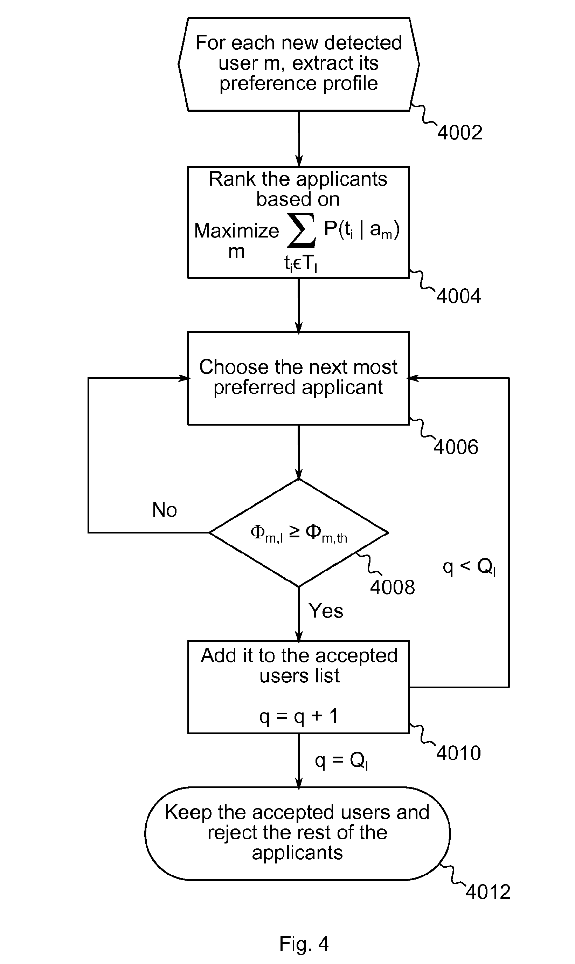

Embodiments might be based on matching theory, which might realize a decentralized approach for user-cell assignments. In essence, a matching game may be considered as a situation in which two sets of players must be assigned to one another, depending on their preferences. In a matching game, each player may have to rank the players in the opposing set using a preference relation which captures this player's evaluation of the players in the other set. In embodiments, the preference relation might be based on a variety of metrics related to the achievable rate, service delay, and correlation with the content profiles. Fig. 4 illustrates a flow chart of an embodiment the SCBSs might follow.

In embodiments, first, users may send request to their most preferred SCBS, based on their local channel state information. It may be assumed that an arbitrary SCBS $l$ might serve up to $Q_l$ users. Each SCBS might extract information 4002 related to a preference profile from the user $m$, and then rank 4004 the applicants according to the correlation of users' attributes with the cell's content profile. Then, the SCBS may accept 4010 the most preferred user 4006, if the cell is feasible 4008 for the user. Otherwise, the SCBS may try the next most preferred candidate 4006. Once the number of accepted users $q$ is equal to $Q_l$, the SCBS may reject 4012 the rest of applicants. Next, the rejected applicants may apply for their next preferred SCBS. In embodiments, the procedure may continue until every user may be assigned to a cell or get rejected by all of its feasible cells. Once the cell assignment is terminated, SCBSs might serve the assigned users and update their cache directories.

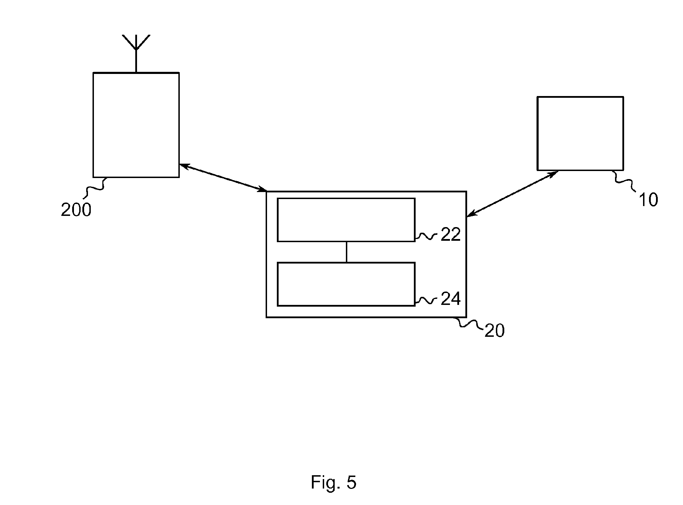

Embodiments further provide an apparatus 20 for providing information related to a content profile of a base station transceiver 200. Fig. 5 illustrates a block diagram of an embodiment of the apparatus 20, comprising one or more caching modules 22 and a control module 24. The apparatus 20 is coupled to a base station transceiver 200, and to an apparatus 10. The one or more caching modules 22 is/are coupled to the control module 24.

The apparatus 20 comprises one or more caching modules 22 to at least temporarily store data content requested by a mobile transceiver 100 assigned to the base station transceiver (200). The apparatus 20 further comprises a control module 24 to determine information about the stored data content, compose the information related to the content profile of the base station transceiver 200 based on the information about the stored content, and provide the information related to the content profile of the base station transceiver 200.

A caching module may correspond to a module for the temporary storage of content, such as HTML pages, images and videos, which may reduce the data transmissions on the backhaul connection of the base station transceiver. The temporary storage of content might be implemented using a memory for at least temporarily storing data, such as, for example, Random Access Memory (RAM), non-volatile storage, and flash memory.

In various embodiments, the information related to the one or more content profiles may be based on information related to at least one element of the group of social attributes, location attributes, interest attributes, or content history attributes of one or more users of the two or more base station transceivers (200), predefined location or interest specific content of the two or more base station transceivers (200).

Social attributes may correspond to information related to the content profile of the user of the base station transceiver 200 in one or more social networks, or information related to social groups the user of the base station transceiver 200 may belong to etc. Location profiles may correspond to information related to a location, such as a landmark, a commercial building, a museum, a performance space, a sports arena etc. Interest profiles may correspond to information related to a field of interest, such as, for example, arts, sports, science, but also more limited fields, such as an epoch in art, or information related to a single painter/performer/composer etc. Content history attributes may correspond to information related to content previously requested by the mobile transceiver or the user of the mobile transceiver. The predefined location or interest specific content of the two or more base station transceivers 200 may correspond to location attributes or interest attributes which may be manually and semi-permanently assigned to the base station transceiver.

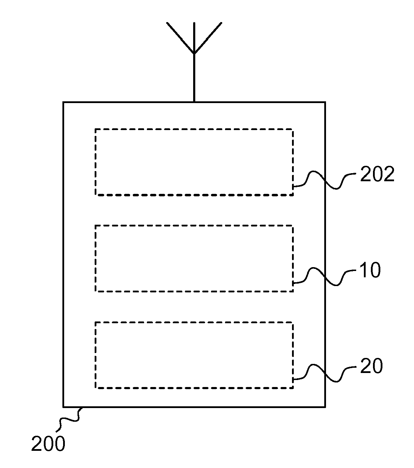

Embodiments further provide a base station transceiver 200 comprising the apparatus 10 and/or the apparatus 20, as illustrated in Fig. 6. In some embodiments, the one or more caching modules 22 may correspond to the caching modules 202 comprised in the base station transceivers 200.

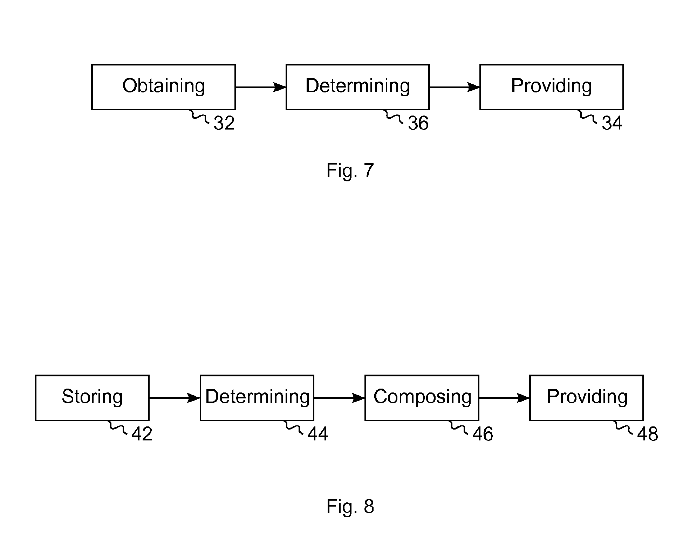

Fig. 7 illustrates a flow chart of an embodiment of a method for providing information related to an assignment of one or more mobile transceivers 100 to at least one out of two or more base station transceivers 200 of a mobile communication system 300. The method comprises obtaining 32 information related to one or more preference profiles about the one or more mobile transceivers 100 and providing 34 the information related to the assignment of the one or more mobile transceivers 100 to the two or more base station transceivers 200. The method further comprises determining 36 the information related to the assignment of the one or more mobile transceivers 100 to the at least one of the two or more base station transceivers 200 based on the information related to the one or more preference profiles from the one or more mobile transceivers 100.

Fig. 8 illustrates a flow chart of a method for providing information related to a content profile of a base station transceiver 200. The method comprises at least temporarily storing 42 data content requested by a mobile transceiver 100 assigned to the base station transceiver 200. The method further comprises determining 44 information about the stored data content, and composing 46 the information related to the content profile of the base station transceiver 200 based on the information about the stored content. The method further comprises providing 48 the information related to the content profile of the base station transceiver 200.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the methods, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

In some embodiments, the backhaul traffic of base station transceivers 200 might be decreased. Backhaul capacity may be considered one of the most important limits in today's base station transceiver deployments, especially for small cells. Embodiments may increases the number of mobile transceivers 100 that could be served within a small cell and hence, might either allows to serve more mobile transceivers per small cell without decreasing their QoE or to increase the QoE of a fixed set of mobile transceivers. Both cases may provide a commercial benefit for an operator.

Embodiments might also be considered robust to incomplete information related to preference profiles. That is, if the preference profiles of a particular mobile transceiver 100 might not be accessible by the apparatus 10, conventional user-cell assignment might be used for that user.

Embodiments might also be implemented either in a centralized or distributed manner. The distributed implementation may remove the need to coordinate the context information among base station transceivers 200 and a central association server, which may comprise the apparatus 10, which may reduce communication overhead compared to a centralized approach. By enabling the base station transceivers 200 to associate users in a self-organized manner, the distributed system might remove a single point of failure, which may make it in general more robust than the centralized approach.

In some embodiments, only the one of the two or more base station transceivers 200 may need to know their cached content. Consequently, the overall communication overhead may be low.

In existing systems, caching policies may rely on the history of users' requests or on the content popularity. Such policies may show poor performance for small cell networks or heterogeneous networks due to their limited cache sizes. Embodiments might not enforce complicated proactive or reactive caching policies.

In existing caching systems, caching policies may also employ user preferences. Such policies might not be consistent for small cell networks, since the active users with various preferences may move in or move out from one cell to another in short time instances. Embodiments, however, may rely on consistent metrics, i.e., the location attributes of the place that SCBS is deployed.

Unlike proactive caching policies in general, embodiments may achieve an efficient use of backhaul capacity. By associating a user to the base station transceiver that stores the most relevant content for this specific user, every content unit (e.g., a video file) that the base station transceiver may fetch from a content server may have at least one user. Unlike most of proactive cache content placement approaches, the proposed scheme might not waste backhaul capacity by caching some contents that might not be used in the future.

A person of skill in the art would readily recognize that steps of various above-described methods can be performed by programmed computers. Herein, some embodiments are also intended to cover program storage devices, e.g., digital data storage media, which are ma-chine or computer readable and encode machine-executable or computer-executable pro-grams of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for locating", etc., may be provided through the use of dedicated hardware, such as "a controller", "a transmitter", "a receiver", "a transceiver", "a locator", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

**Claims**

1. An apparatus (10) for providing information related to an assignment of one or more mobile transceivers (100) to at least one out of two or more base station transceivers (200) of a mobile communication system (300), the apparatus (10) comprising
an input (12) to obtain information related to one or more preference profiles about the one or more mobile transceivers (100);
an output (14) to provide the information related to the assignment of the one or more mobile transceivers (100) to the two or more base station transceivers (200); and
a control module (16) to determine the information related to the assignment of the one or more mobile transceivers (100) to the at least one of the two or more base station transceivers (200) based on the information related to the one or more preference profiles from the one or more mobile transceivers (100).

2. The apparatus (10) of claim 1, wherein the input (12) is further configured to obtain information related to one or more content profiles about the two or more base station transceivers (200), and wherein the control module (16) is configured to determine the information related to the assignment of the one or more mobile transceivers (100)

to the at least one of the two or more base station transceivers (200) also based on the information related to the one or more content profiles about the two or more base station transceivers (200).

3. The apparatus (10) of claim 2, wherein the one or more preference profiles are based on information related to at least one element of the group of social attributes, location attributes, interest attributes, or content history attributes of one or more users of the one or more mobile transceivers (100), and/or wherein the information related to the one or more content profiles is based on information related to at least one element of the group of social attributes, location attributes, interest attributes, or content history attributes of one or more users of the two or more base station transceivers (200), predefined location or interest specific content of the two or more base station transceivers (200).

4. The apparatus (10) of claim 3, wherein the input (12) is further configured to obtain the information related to the one or more content profiles from the two or more base station transceivers (200), and wherein the control module (16) is further configured to determine the information related to the assignment of the one or more mobile transceivers (100) to the at least one of the two or more base station transceivers (200) also based on the information related to the one or more preference profiles available at one or more of the two or more base station transceivers (200). (Distributed Approach)

5. The apparatus (10) of claim 3, wherein the information related to the one or more content profiles about the two or more base station transceivers (200) is based on information related to the content provided by caching modules (202) comprised in the two or more base station transceivers (200).

6. The apparatus (10) of claim 3, wherein the control module (16) is configured to determine information related to a correlation between the information related to the preference profile of the one or more mobile transceivers (100) and the information related to the one or more content profiles about the two or more base station transceivers (200) and to determine the information related to the assignment based on the information related to the correlation.

7. The apparatus (10) of claim 6, wherein the control module (16) is configured to determine a ranking of a plurality of mobile transceivers (100) based on the information related to the correlation, and wherein the control module (16) is configured to determine the information related to the assignment based on the ranking of the plurality of the mobile transceivers (100).

8. The apparatus (10) of claim 1, wherein the control module (16) is configured to obtain the information related to one or more preference profiles about the one or more mobile transceivers (100) from a social network server (400) or from the one or more mobile transceivers (100).

9. The apparatus (10) of claim 1, wherein the control module (16) is further configured to obtain information related to an achievable data rate between the one or more mobile transceivers (100) and the two or more base station transceivers (200) and wherein the control module (16) is further configured to further base the determination of the information related to the assignment on the information related to the achievable data rate.

10. An apparatus (20) for providing information related to a content profile of a base station transceiver (200), the apparatus (20) comprising
one or more caching modules (22) to at least temporarily store data content requested by a mobile transceiver (100) assigned to the base station transceiver (200); and
a control module (24) to

   determine information about the stored data content,
   compose the information related to the content profile of the base station transceiver (200) based on the information about the stored content, and
   provide the information related to the content profile of the base station transceiver (200).

11. The apparatus (20) of claim 10, wherein the information related to the one or more content profiles is based on information related to at least one element of the group of social attributes, location attributes, interest attributes, or content history attributes of one or more users of the two or more base station transceivers (200), predefined location or interest specific content of the two or more base station transceivers (200).

12. A base station transceiver (200) comprising the apparatus (10) of claim 1 and/or the apparatus (20) of claim 10.

**13.** A method for providing information related to an assignment of one or more mobile transceivers (100) to at least one out of two or more base station transceivers (200) of a mobile communication system (300), the method comprising

obtaining (32) information related to one or more preference profiles about the one or more mobile transceivers (100);

providing (34) the information related to the assignment of the one or more mobile transceivers (100) to the two or more base station transceivers (200); and

determining (36) the information related to the assignment of the one or more mobile transceivers (100) to the at least one of the two or more base station transceivers (200) based on the information related to the one or more preference profiles from the one or more mobile transceivers (100).

**14.** A method for providing information related to a content profile of a base station transceiver (200), the method comprising

at least temporarily storing (42) data content requested by a mobile transceiver (100) assigned to the base station transceiver (200); and

determining (44) information about the stored data content,

composing (46) the information related to the content profile of the base station transceiver (200) based on the information about the stored content; and

providing (48) the information related to the content profile of the base station transceiver (200).

**15.** A computer program having a program code for performing at least one of the methods of claims 13 or 14, when the computer program is executed on a computer, a processor, or a programmable hardware component.


**Amended claims in accordance with Rule 137(2) EPC.**

**1.** An apparatus (10) for providing information related to an assignment of one or more mobile transceivers (100) to at least one out of two or more base station transceivers (200) of a mobile communication system (300), the apparatus (10) comprising

an input (12) to obtain information related to one or more preference profiles about the one or more mobile transceivers (100);

an output (14) to provide the information related to the assignment of the one or more mobile transceivers (100) to the two or more base station transceivers (200); and

a control module (16) to determine the information related to the assignment of the one or more mobile transceivers (100) to the at least one of the two or more base station transceivers (200) based on the information related to the one or more preference profiles from the one or more mobile transceivers (100), wherein the one or more preference profiles are based on information related to at least one element of the group of social attributes, location attributes, interest attributes, or content history attributes of one or more users of the one or more mobile transceivers (100).

**2.** The apparatus (10) of claim 1, wherein the input (12) is further configured to obtain information related to one or more content profiles about the two or more base station transceivers (200), and wherein the control module (16) is configured to determine the information related to the assignment of the one or more mobile transceivers (100) to the at least one of the two or more base station transceivers (200) also based on the information related to the one or more content profiles about the two or more base station transceivers (200).

**3.** The apparatus (10) of claim 2, wherein the information related to the one or more content profiles is based on information related to at least one element of the group of social attributes, location attributes, interest attributes, or content history attributes of one or more users of the two or more base station transceivers (200), predefined location or interest specific content of the two or more base station transceivers (200).

**4.** The apparatus (10) of claim 3, wherein the input (12) is further configured to obtain the information related to the one or more content profiles from the two or more base station transceivers (200), and wherein the control module (16) is further configured to determine the information related to the assignment of the one or more mobile transceivers (100) to the at least one of the two or more base station transceivers (200) also based on the information related to the one or more preference profiles available at one or more of the two or more base station transceivers (200).

**5.** The apparatus (10) of claim 3, wherein the information related to the one or more content profiles about the two or more base station transceivers (200) is based on information related to the content provided by caching modules (202) comprised in the two or more base station transceivers (200).

6. The apparatus (10) of claim 3, wherein the control module (16) is configured to determine information related to a correlation between the information related to the preference profile of the one or more mobile transceivers (100) and the information related to the one or more content profiles about the two or more base station transceivers (200) and to determine the information related to the assignment based on the information related to the correlation.

7. The apparatus (10) of claim 6, wherein the control module (16) is configured to determine a ranking of a plurality of mobile transceivers (100) based on the information related to the correlation, and wherein the control module (16) is configured to determine the information related to the assignment based on the ranking of the plurality of the mobile transceivers (100).

8. The apparatus (10) of claim 1, wherein the control module (16) is configured to obtain the information related to one or more preference profiles about the one or more mobile transceivers (100) from a social network server (400) or from the one or more mobile transceivers (100).

9. The apparatus (10) of claim 1, wherein the control module (16) is further configured to obtain information related to an achievable data rate between the one or more mobile transceivers (100) and the two or more base station transceivers (200) and wherein the control module (16) is further configured to further base the determination of the information related to the assignment on the information related to the achievable data rate.

10. An apparatus (20) for providing information related to a content profile of a base station transceiver (200), the apparatus (20) comprising

   one or more caching modules (22) to at least temporarily store data content requested by a mobile transceiver (100) assigned to the base station transceiver (200); and
   a control module (24) to

      determine information about the stored data content,
      compose the information related to the content profile of the base station transceiver (200) based on the information about the stored content, and
      provide the information related to the content profile of the base station transceiver (200).

11. The apparatus (20) of claim 10, wherein the information related to the one or more content profiles is based on information related to at least one element of the group of social attributes, location attributes, interest attributes, or content history attributes of one or more users of the two or more base station transceivers (200), predefined location or interest specific content of the two or more base station transceivers (200).

12. A base station transceiver (200) comprising the apparatus (10) of claim 1 or the apparatus (20) of claim 10.

13. A method for providing information related to an assignment of one or more mobile transceivers (100) to at least one out of two or more base station transceivers (200) of a mobile communication system (300), the method comprising
   obtaining (32) information related to one or more preference profiles about the one or more mobile transceivers (100);
   determining (36) the information related to the assignment of the one or more mobile transceivers (100) to the at least one of the two or more base station transceivers (200) based on the information related to the one or more preference profiles from the one or more mobile transceivers (100), and
   providing (34) the information related to the assignment of the one or more mobile transceivers (100) to the two or more base station transceivers (200),
   wherein the one or more preference profiles are based on information related to at least one element of the group of social attributes, location attributes, interest attributes, or content history attributes of one or more users of the one or more mobile transceivers (100).

14. A method for providing information related to a content profile of a base station transceiver (200), the method comprising
   at least temporarily storing (42) data content requested by a mobile transceiver (100) assigned to the base station transceiver (200); and
   determining (44) information about the stored data content,
   composing (46) the information related to the content profile of the base station transceiver (200) based on the information about the stored content; and

providing (48) the information related to the content profile of the base station transceiver (200).

**15.** A computer program having a program code for performing at least one of the methods of claims 13 or 14, when the computer program is executed on a computer, a processor, or a programmable hardware component.

Fig. 1

Fig. 2

Fig. 3

For each new detected user m, extract its preference profile — 4002

Rank the applicants based on

$$\text{Maximize} \atop m \quad \sum_{t_i \in T_l} P(t_i \mid a_m)$$

4004

Choose the next most preferred applicant — 4006

$\Phi_{m,l} \geq \Phi_{m,th}$ — 4008

No

q < Q_l

Yes

Add it to the accepted users list

q = q + 1

4010

q = Q_l

Keep the accepted users and reject the rest of the applicants — 4012

Fig. 4

Fig. 5

202

10

20

200

Obtaining → Determining → Providing

~32    ~36    ~34

Fig. 7

Storing → Determining → Composing → Providing

~42    ~44    ~46    ~48

Fig. 8

Europäisches
Patentamt
European
Patent Office
Office européen
des brevets

# EUROPEAN SEARCH REPORT

Application Number

EP 14 30 6738

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 591 103 B1 (DUNN JAMES M [US] ET AL) 8 July 2003 (2003-07-08) * column 4, lines 37-59 * * column 5, line 43 - column 6, line 14 * * column 8, lines 26-36; claim 1; figures 1,2 * | 1-9,12, 13,15 | INV. H04W36/08 |
| A | WO 2014/001025 A2 (TELEFONICA SA [ES]) 3 January 2014 (2014-01-03) * page 1, line 10 - page 6, line 22 * | 1-9,12, 13,15 | |
| A | US 2012/094658 A1 (MACIAS JOHN F [US] ET AL) 19 April 2012 (2012-04-19) * paragraphs [0020] - [0026], [0069] - [0083]; figure 1 * | 1-9,12, 13,15 | |

TECHNICAL FIELDS
SEARCHED     (IPC)

H04W

~~The present search report has been drawn up for all claims~~

| Place of search | Date of completion of the search | Examiner |
|---|---|---|
| Munich | 6 May 2015 | Milano, Massimo |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

 

& : member of the same patent family, corresponding
  document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-9, 12, 13, 15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 14 30 6738

The Search Division considers that the present European patent application does not comply with the
requirements of unity of invention and relates to several inventions or groups of inventions, namely:

```
    1. claims: 1-9, 12, 13, 15

        Method, apparatus, base station transceiver, and computer
        program for the assignment of mobile transceivers to base
        station transceivers.
                              ---

    2. claims: 10, 11, 14

        Method and apparatus for determining the content profile of
        a base station transceiver.
                              ---
```

## ANNEX TO THE EUROPEAN SEARCH REPORT
## ON EUROPEAN PATENT APPLICATION NO.

EP 14 30 6738

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2015

| Patent document cited in search report | | Publication date | Patent family member(s) | | Publication date |
|---|---|---|---|---|---|
| US 6591103 | B1 | 08-07-2003 | NONE | | |
| WO 2014001025 | A2 | 03-01-2014 | EP 2875669 A2 | | 27-05-2015 |
| | | | WO 2014001025 A2 | | 03-01-2014 |
| US 2012094658 | A1 | 19-04-2012 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. WOO ; E. JEONG ; S. PARK.** Comparison of caching strategies in modem cellular backhaul networks. *Proceedings of the 11th annual international conference on Mobile systems, applications, and services (MobiSys), Taipei, Taiwan,* June 2013
- **N. GOLREZAEI ; K. SHANMUGAM ; A. G. DIMAKIS ; A. F. MOLISCH.** Femtocaching: Wireless video content delivery through distributed caching helpers. *Proceedings of INFOCOM, Orlando, FL,* March 2012

- **H. AHLEHAGH ; S. DEY.** Video-aware scheduling and caching in the radio access network. *IEEE/ACM Transactions on Networking,* August 2013, 1063-6692
- **P. BLASCO ; D. GUNDUZ.** Learning-based optimization of cache content in a small cell base station. *Proc. of IEEE International Conference on Communications (ICC 2014), Sydney, Australia,* June 2014